# EUROPEAN PATENT SPECIFICATION

(11) **EP 1 978 383 B1**
(45) Date of publication and mention of the grant of the patent: **28.05.2014**
(21) Application number: 08005802.7
(22) Date of filing: 27.03.2008
(51) Int. Cl.: G02B 6/036, G02B 6/02

(54) **Transmission optical fiber having large effective area**
Übertragungsglasfaser mit einem großen Wirkbereich
Fibre optique de transmission disposant d'une large zone effective

(30) Priority: 06.04.2007 FR 0702545
(43) Date of publication of application: 08.10.2008
(73) Proprietor: Draka Comteq B.V., 1083 HJ Amsterdam (NL)
(72) Inventor: De Montmorillon, Louis-Anne, 78000 Versailles (FR); Sillard, Pierre, 78150 Le Chesnay (FR); Molin, Denis, 91210 Draveil (FR); Bigot-Astruc, Marianne, 91460 Marcoussis (DE); Richard, Simon, 91140 Villebon sur Yvette (FR)
(74) Representative: Algemeen Octrooi- en Merkenbureau B.V.

(56) References cited:
- US-A- 4 852 968
- US-A1- 2005 244 120
- AIKAWA K ET AL: "SINGLE-MODE OPTICAL FIBER WITH EFFECTIVE CORE AREA LARGER THAN 160 MUM2" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999; [OPTICAL FIBER COMMUNICATION CONFERENCE / INTERNATIONAL CONFERENCE ON INTEGRATED O, vol. 1, 26 September 1999 (1999-09-26), pages I-302/I, XP000964618 ISBN: 978-0-7803-5430-2

## Description

The present invention relates to the field of optical fiber transmission, and more specifically to a line fiber having an enlarged effective area without increasing the bending and microbending losses.

For optical fibers, the refractive index profile is generally qualified in relation to the graph plotting the function relating the refractive index with the optical fiber radius. Conventionally the distance r to the center of the optical fiber is shown along the abscissa, and the difference between the refractive index at radius r and the refractive index of the outer optical cladding of the optical fiber is shown along the ordinate axis. The outer optical cladding has a constant refractive index and usually consists of pure silica. However, the outer optical cladding may also contain one or more dopants. The refractive index profile is referred to as a "step", "trapezoidal" or "triangular" profile for graphs having the respective shapes of a step, trapezoid or triangle. These curves are generally examples of the theoretical or set profile of the optical fiber, the manufacturing stresses of the optical fiber possibly leading to a slightly different profile.

An optical fiber conventionally consists of a central optical core, having the function of transmitting and possibly amplifying an optical signal, and of an optical outer cladding having the function of confining the optical signal within the central core. For this purpose, the refractive indexes of the central core n_{c} and of the optical outer cladding n_{g} are such that n_{c}>n_{g}. As is well known, the propagation of an optical signal in a single-mode optical fiber decomposes into a fundamental mode guided in the central core and into secondary modes guided over a certain distance in the central core-cladding assembly, called cladding modes.

Conventionally, step-index fibers, also called single mode fibers or SMF, are used as a line fiber for transmission systems with optical fibers. These optical fibers exhibit a chromatic dispersion and a chromatic dispersion slope meeting specific telecommunications standards, as well as normalized values for the effective area and the cut-off wavelength. Typically, for terrestrial transmission systems, standard single mode fibers (SSMF) are used, which have a positive dispersion (D) and a positive dispersion slope (P), an effective area (S_{eff}) of about 80 µm² and an attenuation (Att) of about 0.19 dB/km (measured at a wavelength of 1550 nm). Submarine transmission systems with repeaters typically use hybrid transmission lines with optical fibers having a positive dispersion, a large effective area (about 100-110 µm²) and a low attenuation (0.17-0.19 dB/km; measured at a wavelength of 1550 nm) and optical fibers with negative dispersion. Submarine transmission systems without repeaters typically use transmission lines comprising combinations of optical fibers having a positive dispersion and an effective area of between 80 and 110 µm².

As known *per se,* an increase in the effective area of a transmission optical fiber contributes to the reduction of non-linear effects in the optical fiber. A transmission optical fiber having an enlarged effective area allows for transmission over a longer distance and/or an increase in the functional bands of the transmission system. In order to increase the effective area of a transmission optical fiber, optical fiber profiles with an enlarged and flattened central core as compared to a SSMF were proposed. However, such a change in the shape of the central core of the optical fiber leads to an increase in the bending and microbending losses and to an increase of the effective cut-off wavelength of the optical fiber. The effective cut-off wavelength is conventionally measured as the wavelength as of which the optical signal is single mode after propagation over two meters of optical fiber, as defined by subcommittee 86A of the International Electrotechnical Commission under standard IEC 60793-1-44.

The document US-A-6,658,190 describes a transmission optical fiber with an enlarged effective area of more than 110 µm². This optical fiber has a very wide central core (11,5 - 23,0 µm), being 1.5 to 2 times that of a SSMF, and a configuration with a constant or slightly depressed cladding. To compensate for the increase in bending losses caused by an increase in the effective area, this document proposes to increase the diameter of the optical fiber (see Fig. 29 of US-A-6,658,190). Such an increase in the diameter of the optical fiber however involves costs and in addition causes cabling problems by incompatibility with the other optical fibers. This document further points out that the cut-off wavelength decreases with the length of the considered optical fiber (see Fig. 5 of US-A-6,658,190) and notably that the optical fiber reaches single-mode character after 1 km of transmission. Such a measurement of the cut-off wavelength however does not comply with the normalized measurements mentioned earlier.

The publication of Masao Tsukitani et al. "Ultra Low Nonlinearity Pure-Silica-Core Fiber with an Effective Area of 211 µm2 and Transmission Loss of 0.159 dB/km", M3.3.2, ECOC 2002, September 9th 2002, describes an optical fiber with a refractive index profile configuration having a wide and slightly depressed cladding adjacent to a central core. Such an optical fiber has an effective area of 211 µm² with a low attenuation but in order to limit the bending losses, the diameter of the optical fiber was increased to 170 µm (versus 125 µm for a SSMF) which leads to significant manufacturing costs and problems of incompatibility with the other optical fibers.

Optical fiber configurations for increasing the effective area were proposed in the publication of Kazumasa Ohsono et al. "The Study of Ultra Large Effective Area Fiber & Mating Dispersion Slope Compensating Fiber for Dispersion Flattened Hybrid Optical Fiber DWDM Link", IWCS 2002, November 18th 2002, pp. 483-487, and in the publication of Kazuhiko Aikawa et al. "Single-Mode Optical Fiber with Effective Core Area larger than 160 µm2", ECOC 1999, September 26th 1999, page I-302.

Moreover, document US-A-6,665,482 proposes a pedestal optical fiber refractive index profile for achieving an effective area being more than 90 µm², but the values of the effective area of the examples provided remain less than 110 µm² The document US-A-5,781,684 describes a coaxial optical fiber having a large effective area for a dispersion shifted fiber, also called Non-Zero Dispersion Shifted Fiber (NZDSF). This optical fiber has a cut-off wavelength which is too high for remaining single-mode in the C+ band (1530 nm-1570 nm) and a mode field diameter which is too small (< 11 µm at 1550 nm).

The document US-A-2005/0244120 describes an optical fiber with a large effective area (>75 µm²) and a low attenuation (<0.20 dB/km at 1550 nm). The optical fiber described in this document has a refractive index profile with a central core, an intermediate cladding and a depressed cladding. The depressed cladding is however not sufficiently buried (-0.1 %) or too wide (7 to 7.4 µm) for achieving the optical characteristics desired by the present invention, notably the combination of a large effective area and a low effective cut-off wavelength.

In addition, the document US-A-6,483,975 describes an optical fiber with a large effective area (> 100.0 µm²) and a positive dispersion (> 20 ps/(nm-km)). Several optical fiber refractive index profiles are described in this document and notably a profile with a central core, an intermediate cladding and a depressed cladding (see fig. 5a and 5b of US-A-6,483,975). The depressed cladding is however too wide (width r₃-r₂ of 15 - 19 µm) and too close to the central core (width of intermediate cladding r₂-r₁ of 2 - 4 µm) to achieve the optical characteristics desired by the present invention.

The document US-A-4,852,968 describes an optical fiber having a refractive index profile with a depressed cladding. This document aims to improve certain optical parameters of the optical fiber by the presence of a depressed cladding, and notably the dispersion, confinement and bending losses parameters. This document does not mention the impact on the effective cut-off wavelength or on the effective area. Only a mode field diameter of 9.38 µm is mentioned, which would lead to an effective area of less than 80 µm².

The document EP-A-1 477 831 describes an optical fiber with a large effective area (> 80 µm²) and a cut-off wavelength limited to 1310 nm. Several optical fiber profiles are described in this document and notably a refractive index profile with a central core, an intermediate cladding and a depressed cladding (seeFig. 8 of EP-A-1 477 831). The depressed cladding is however too wide (- 15 µm) for achieving the optical characteristics desired by the present invention and the outer diameter of the depressed cladding is very large (~ 33 µm), which involves significant manufacturing costs.

Therefore, there exists a need for a transmission optical fiber which has an enlarged effective area, being more than 120 µm², without the degradation of the other optical parameters of the optical fiber as compared with a SSMF, notably in terms of losses and dispersion, and with an effective cut-off wavelength of less than 1600 nm.

For this purpose, the invention proposes an optical fiber profile comprising a central core, an intermediate cladding and a depressed cladding. The central core is enlarged and flattened as compared with a SSMF in order to enlarge the effective area. The depressed cladding is sufficiently remote from the central core via the intermediate cladding in order to avoid perturbation of the fundamental mode that are too strong, but the depressed cladding is sufficiently buried and narrow in order to limit the bending and microbending losses and especially to control the cut-off wavelength. The propagation of leakage modes is also limited, or even avoided. Thus, the optical fiber according to the invention has an effective area of more than 120 µm² at 1550 nm with a cut-off wavelength guaranteeing the single-mode character of the optical fiber in the C band and bending or microbending losses equivalent to those of a SSMF.

More particularly, the invention proposes a transmission optical fiber comprising:
- a central core having a radius equal to or more than 5.5 µm and a refractive index difference between 3.0.10⁻³ and 5.0.10⁻³ with the outer optical cladding;
- an intermediate cladding having a radius and a refractive index difference between -1.0.10⁻³ and 1.0.10⁻³ with the outer cladding, the width of the intermediate cladding being more than 5 µm;
- a depressed cladding having a radius between 11.5 µm and 16 µm and a refractive index difference between -15.0.10⁻³ and -3.5.10⁻³ with the outer cladding, the width of the depressed cladding being less than 5 µm;
- the optical fiber having an effective area at 1550 nm of equal to or more than 120 µm² and an effective cut-off wavelength of less than 1600 nm.

According to embodiments, the optical fiber according to the invention may further comprise one or more of the following characteristics:
- a mode field diameter of more than 11.5 µm;
- a chromatic dispersion equal to or less than 21.5 ps/nm-km, at a wavelength of 1550 nm;
- a chromatic dispersion slope equal to or less than 0.065 ps/nm²-km, at a wavelength of 1550 nm;
- an attenuation equal to or less than 0.19 dB/km, at a wavelength of 1550 nm;
- bending losses equal to or less than 20 dB/m for a bending radius of 10 mm, at a wavelength of 1625 nm;
- microbending losses at a wavelength of 1550 nm, substantially equivalent to the microbending losses of a standard single-mode fiber (SSMF) subject to identical stresses.

Other features and advantages of the invention will become apparent upon reading the description which follows embodiments of the invention, given by way of example and with reference to the single appended figure, which shows a graphic illustration of the set profile of a step-index fiber according to an embodiment of the invention. Additional embodiments are shown in the claims.

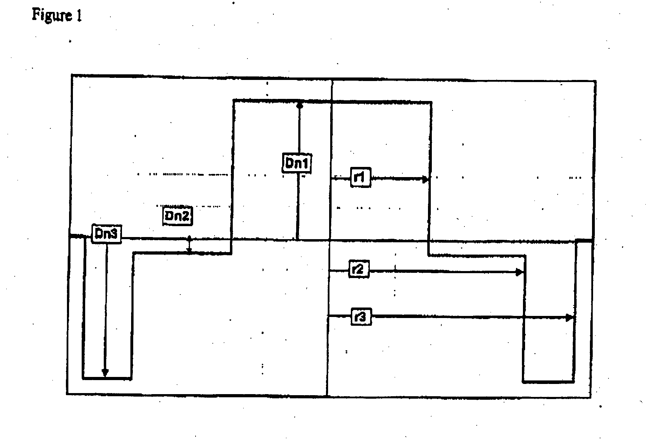

The optical fiber of the invention will be described with reference to Fig. 1 which illustrates a set profile, i.e., illustrative of the theoretical profile of the optical fiber, the optical fiber actually obtained after drawing the fiber from the preform may have a slightly different profile.

The transmission optical fiber according to the invention comprises a central core having a refractive index difference Δn₁ with an outer cladding acting as an optical cladding, an intermediate (inner) cladding having a refractive index difference Δn₂ with the outer cladding and a buried or depressed (inner) cladding having a refractive index difference Δn₃ with the outer cladding. The refractive indexes of the central core, the intermediate cladding and the depressed cladding are substantially constant over their entire widths. The width of the central core is defined by its radius r₁ and the width of the claddings by their respective outer radii, r₂ and r₃. The width of the intermediate cladding is defined by r₂ minus r₁ and the width of the burried cladding is defined by r₃ minus r₂. Typically, the central core, the intermediate cladding and the depressed cladding are obtained by CVD (Chemical Vapor Deposition) deposition in a silica tube and the outer cladding is formed by overcladding the silica tube generally with natural or synthetic silica which may or may not be doped. However, the outer optical cladding may also be obtained by any other deposition technique (VAD: vapor axial deposition or OVD: outside vapor deposition).

The optical fiber according to the present invention comprises a central core having a radius r₁ equal to or more than 5.5 µm and a refractive index difference Δn₁ equal to or less than 5.10⁻³ relatively to the outer optical cladding (in silica for example). The central core of the optical fiber according to the present invention is therefore widened and flattened as compared with the central core of a SSMF having a radius r₁ of 4.35 and a refractive index difference of Δn₁ of 5.2. The mode field diameter may thereby be enlarged - to more than 11.5 µm - and the effective area of the optical fiber may be increased - to more than 120 µm². The optical fiber according to the invention also comprises an intermediate cladding having a radius r₂ and a refractive index difference Δn₂ with the outer cladding and a depressed cladding having a radius r₃ and a refractive index difference Δn₃ with the outer cladding. The depressed cladding of the optical fiber according to the invention is carefully controlled. The depressed cladding is sufficiently remote from the central core (by the width of the intermediate cladding) so that it does not excessively perturb the propagation of the fundamental mode and so that it does not influence the optical signal propagation characteristics. In addition, the depressed cladding is sufficiently deep and narrow in order to guarantee a reduction in the bending and microbending losses and to control the losses of the directly higher order mode (LP11) and therefore the cut-off wavelength which results from this. The leakage mode behavior is also limited, or even avoided. A width of the intermediate cladding (r₂ - r₁) of more than 5 µm guarantees a sufficient distance of the depressed cladding from the central core so as not to perturb the fundamental mode in the central core. With a depth of the depressed cladding being equal to or more than -3.5.10⁻³ and a width of the depressed cladding (r₃ - r₂) being less than 5 µm, the bending and microbending losses may be limited efficiently while controlling the cut-off wavelength, i.e., while limiting the propagation distance of the higher order modes in the optical fiber. By controlling the width and depth of the depressed cladding of the optical fiber according to the invention, it is possible to limit the effective cut-off wavelength of the present optical fiber to 1600 nm while the effective area was considerably enlarged as compared with a SSMF for equivalent losses.

Table I below provides six examples of possible refractive index profiles for a transmission optical fiber according to the invention (Examples 1, 2, 3, 4, 5, and 6) and two examples which fall outside the scope of the invention (Examples 1b and 1 c) as compared with a standard fiber SSMF. In addition, the values according to the present invention as recited in claim 1 as well as preferred embodiments of the present invention are cited. The first column assigns a reference to each profile. The following columns provide the values for the radii of each section (r₁ to r₃) as well as their differences (r₂ - r₁) and (r₃ - r₂); and the following columns provide the values for the refractive index differences of each section with the outer cladding (Δn₁ to Δn₃). The refractive index values are measured at a wavelength of 633 nm. The optical fibers of the examples of Table I have an outer diameter of 125 µm. The values of Table I correspond to set profiles of optical fibers.

**TABLE I**

| Profile | r₁ (µm) | r₂ (µm) | r₂- r₁ (µm) | r₃ (µm) | r₃- r₂ (µm) | Δn₁ (·10⁻³) | Δn₂ (·10⁻³) | Δn₃ (·10⁻³) |
|---|---|---|---|---|---|---|---|---|
| invention | ≥5.5 | | > 5 | | < 5 | ≤5.0 | | ≤-3.5 |
| Preferred | 5.5 to 7.5 | 10.5 to 14.0 | 5 to 8 | 11.5 to 16.0 | 1 to 5 | 3.0 to 5.0 | -1,0 to 1.0 | -15.0 to -3.5 |
| SSMF | 4.35 | - | - | - | - | 5.2 | - | - |
| 1 | 6.04 | 11.27 | 5.23 | 16.0 | 4.73 | 4.3 | 0.0 | -4.7 |
| 1b* | 6.04 | 11.27 | 5.23 | 16.0 | 4.73 | 4.3 | 0.0 | 0.0 |
| 1c* | 6.04 | 8.00 | 1.96 | 12.73 | 4.73 | 4.3 | 0.0 | -4.7 |
| 2 | 5.84 | 10.95 | 5.11 | 15.6 | 4.65 | 4.0 | 0.3 | -6.0 |
| 3 | 6.31 | 11.83 | 5.51 | 14.3 | 2.47 | 4.1 | -0.3 | -4.0 |
| 4 | 6.31 | 12.52 | 6.21 | 15.0 | 2.48 | 4.2 | -0.3 | -4.8 |
| 5 | 6.34 | 11.77 | 5.43 | 15.5 | 3.73 | 3.9 | 0.3 | -5.0 |
| 6 | 6.50 | 13.33 | 6.83 | 16.0 | 2.67 | 4.0 | -0.3 | -6.0 |

| | | | | | | | | |
|---|---|---|---|---|---|---|---|---|
| * not according to the invention | | | | | | | | |

The transmission optical fiber according to the invention is illustrated in a non-limiting way by the six examples of the table above. In addition, the values according to the present invention as recited in claim 1 as well as preferred embodiments of the present invention are cited. Notably, it is noted that the optical fiber according to the invention has a wider central core than a SSMF and a smaller refractive index difference as compared with a SSMF, i.e., a central core having a radius Δr₁ equal to or more than 5.5 µm and a refractive index difference Δn₁ equal to or less than 5.0.10⁻³ relatively to the outer optical cladding. It is also noted that the optical fiber according to the invention has a depressed cladding (r₃, Δn₃) separated from the central core by an intermediate cladding (r₂, Δ n₂) having a width of at least 5 µm and wherein the depressed cladding is narrow, being less than 5 µm, and deeply buried by at least -3.5.10⁻³; relatively to the outer cladding. The intermediate cladding may be in silica, i.e., having the same refractive index as the outer cladding, or in slightly doped silica; Δn₂ is notably between -1.0.10⁻³ and 1.0.10⁻³.

The optical fiber according to the invention has a profile as described above and with the following preferential characteristics: the central core (r₁, Δn₁) has a radius r₁ between 5.5 µm and 7.5 µm and a refractive index difference with the outer cladding Δn₁ between 3.0.10⁻³ and 5.0.10⁻³; the intermediate cladding (r₂, Δn₂) has a radius r₂ between 10.5 µm and 14.0 µm for a width (r₂-r₁) between 5 µm and 8 µm and a refractive index difference Δn₂ with the outer cladding between -1.0.10⁻³ and 1.0.10⁻³; the depressed cladding (r₃, Δn₃) has a radius r₃ between 11.5 µm and 16.0 µm for a width (r₃-r₂) between 1 µm and 5 µm and a refractive index difference Δn₃ with the outer cladding between -15.0.10⁻³ and -3.5.10⁻³.

It is also noted that the depressed cladding has an outer radius r₃ limited to 16 µm. With this small radius value of the depressed cladding, it is possible to limit the manufacturing costs of a preform which would be related to the deposition of a section of doped silica that is too large.

The transmission optical fiber according to the invention, having a refractive index profile as described earlier, has an enlarged effective area with a limited effective cut-off wavelength and bending and microbending losses equivalent to those of a SSMF at the useful wavelengths, e.g. at 1550 nm. The optical optical fiber according to the invention also has an equivalent or even lower attenuation than a SSMF with a controlled dispersion and dispersion slope, hardly stronger than a SSMF.

The following Table II illustrates simulated optical characteristics for the transmission optical fibers corresponding to the refractive index profiles of Table I. In Table II, the first column repeats the references of Table I. The following columns provide, for each optical fiber profile, the values for the effective cut-off wavelength (λ_{Ceff}, measured over two meters of optical fiber according to the current standards), the effective area (S_{eff} at the wavelength of 1550 nm), the mode field diameters (2W₀₂ at the wavelength of 1550 nm), the chromatic dispersion (D, at the wavelength of 1550 nm), and the dispersion slope (P, at the wavelength of 1550 nm). The following columns provide, for each optical fiber profile, the values for the attenuation (Att, at the wavelength of 1550 nm), the bending losses (PPC, over a radius of 10 mm at the wavelength of 1625 nm), and the microbending losses (S_{µC} at the wavelength of 1550 nm). The values for the microbending losses (S_{µC}) are relative values and expressed relatively to the losses in a SSMF which would be subject to the same stresses, i.e., for a 125 µm diameter optical fiber. The microbending losses may be measured, for example by a so-called fixed diameter drum method. This method is described in the technical recommendation of the International Electrotechnical Commission of subcommittee 86A under reference IEC TR-62221 and will not be described any further here.

**TABLE II**

| Profile | λ_{Ceff} (µm) | S_{eff} @1550nm (µm²) | 2W₀₂ @1550nm (µm) | D @1550nm (ps/nm-km) | P @1550nm (ps/nm²-km) | Att @1550nm (dB/km) | PPC (10 mm) @1625nm (dB/m) | S_{µC} @1550nm (dB) |
|---|---|---|---|---|---|---|---|---|
| invention | < 1,600 | ≥ 120 | | | | | | |
| preferred | ≥ 1350 | | > 11.5 | ≤ 21.5 ≥ 16 | ≤ 0.065 ≥ 0.050 | ≤ 0.19 | ≤ 20 | -1 |
| SSMF | <1.300 | 80 | 10.3 | 16.8 | 0.058 | -0.19 | -50 | 1 |
| 1 | <1,550 | 120 | 12.1 | 20.5 | 0.063 | <0.19 | <10 | -1 |
| 1b* | <1,560 | 120 | 12.3 | 19.5 | 0.061 | -0.19 | >20 | >1 |
| 1c* | <1,500 | 110 | 11.1 | 22.0 | 0.063 | >0.19 | <10 | -1 |
| 2 | <1,500 | 120 | 12.2 | 20.5 | 0.064 | <0.19 | <10 | -1 |
| 3 | <1,500 | 125 | 12.3 | 20.5 | 0.063 | <0.19 | <20 | -1 |
| 4 | <1,550 | 125 | 12.2 | 20.5 | 0.063 | <0.19 | <10 | -1 |
| 5 | <1,550 | 135 | 12.9 | 20.5 | 0.064 | <0.19 | <20 | -1 |
| 6 | <1,550 | 130 | 12.5 | 20.5 | 0.063 | <0.19 | <10 | -1 |

| | | | | | | | | |
|---|---|---|---|---|---|---|---|---|
| * not according the invention | | | | | | | | |

It is seen from Table II that the effective area was actually increased for the optical fiber according to the invention as compared with a SSMF with an effective area equal to or more than 120 µm². An effective area ranging up to 240 µm² may be achieved with an optical fiber profile as defined earlier, with a mode field diameter between 11.5 µm and 17 µm. This increase in the effective area certainly causes an increase in the effective cut-off wavelength which nevertheless remains limited to 1600 nm; the optical fiber according to the invention therefore retains its single-mode character in the C band. Notably, the optical fiber according to the invention with the profile defined above, may have an effective cut-off wavelength between 1350 nm and 1600 nm.

It is also seen from Table II that the bending and microbending losses of the optical fiber according to the invention are equivalent or even better, to the bending and microbending losses of a SSMF. Further, the optical fiber according to the invention has equivalent attenuation compared with a SSMF or even better, i.e., attenuation equal to or less than 0.19 dB/km at the wavelength of 1550 nm.

Moreover, the dispersion and dispersion slope values of the optical fiber according to the invention could be limited to 21.5 ps/nm-km and 0.065 ps/nm²-km at the wavelength of 1550 nm; notably, a chromatic dispersion between 16 ps/nm-km and 21.5 ps/nm-km and a dispersion slope between 0.050 ps/nm²-km and 0.065 ps/nm²-km may be obtained with an optical fiber having the profile described earlier. This limitation of the chromatic dispersion is important for limiting the length of dispersion compensation fibers which introduce a further attenuation in the transmission system.

Examples 1b and 1 c fall outside the scope of the invention. Example 1b has the same central core as Example 1 but does not have a depressed cladding. The inner cladding corresponds to the refractive index of the outer cladding, i.e., in pure silica. This is a profile as described in the aforementioned US-A-6,658,190 with a constant cladding configuration. The absence of a depressed cladding causes an increase in the effective cut-off wavelength beyond 1550 nm. Further, the absence of a depressed cladding in Example 1b causes an increase in bending and microbending losses.

Example 1 c also has the same central core as Example 1 and a same depressed cladding as Example 1 but the depressed cladding is too close to the central core. The intermediate cladding separating the depressed cladding from the central core is narrower than 5 µm. The fundamental mode propagating in the central core is then influenced by the depressed cladding which causes a smaller effective area (<120 µm²) and an increase in the chromatic dispersion (>21.5 ps/nm-km).

The transmission optical fiber according to the present invention is particularly suitable for long distance transmission systems in the C band. By increasing the effective area, without any notable degradation of the other optical parameters of the optical fiber, it is possible to increase the power of transmitted optical signals without increasing the non-linear effects; the signal-to-noise ratio of the transmission line is then improved, which is particularly desired in terrestrial or submarine long distance optical transmission systems.

Further, the optical fiber according to the invention complies with the recommendations of the ITU-T G.654.B standard which notably recommends an effective cut-off wavelength between 1350 nm and 1600 nm and/or a cable cut-off wavelength (λ_{cc}) of less than 1530 nm, a mode field diameter between 9.5 µm and 13 µm, a chromatic dispersion of less than 22 ps/nm-km and a dispersion slope of less than 0.070 ps/nm²-km, and a cable attenuation of less than 0.22 dB/km. The optical fiber according to the invention may thereby be installed in many transmission systems with good compatibility with the other optical fibers of the system.

## Claims

1. A transmission optical fiber, comprising from the center to the periphery:
- a central core having a radius (r₁) equal to or more than 5.5 µm and a refractive index difference (Δn₁) between 3.0.10⁻³ and 5.0.10⁻³. with an outer optical cladding;
- an intermediate cladding having a radius (r₂) and a refractive index difference (Δn₂) between -1.0.10⁻³ and 1.0.10⁻³ with the outer optical cladding, the width of the intermediate cladding (r₂-r₁) being more than 5 µm;
- a depressed cladding having a radius (r₃) between 11.5 µm and 16 µm and a refractive index difference (Δn₃) between -15.0.10⁻³ and -3.5.10⁻³ - 3.5.10⁻³ with the outer optical cladding, the width of the depressed cladding (r₃-r₂) being less than 5 µm;
the optical fiber having an effective area (S_{eff}) at 1550 nm, equal to or more than 120 µm² and an effective cut-off wavelength (λ_{Coff} ) of less than 1600 nm.

2. The optical fiber according to claim 7, wherein the radius (r₁) of the central core is between 5.5 µm and 7.5 µm.

3. The optical fiber according to any of the preceding claims, wherein the radius (r₂) of the intermediate cladding is between 10.5 µm and 14.0 µm.

4. The optical fiber according to any of the preceding claims, wherein the width (r₂ - r₁) of the intermediate cladding is equal to or less than 8 µm.

5. The optical fiber according to any of the preceding claims, wherein the width (r₃ - r₂) of the depressed cladding is equal to or more than 1 µm.

6. The optical fiber according to any of the preceding claims, having a mode field diameter (2W₀₂) of more than 11.5 µm.

7. The optical fiber according to any of the preceding claims, having a chromatic dispersion equal to or less than 21.5 ps/nm-km at wavelength of 1550 nm,

8. The optical fiber according to of the preceding claims, having a chromatic dispersion slope equal to or less than 0.065 ps/nm²-km at wavelength of 1550 nm.

9. The optical fiber according to of the preceding claims, having an attenuation equal to or less than 0.19 dB/km at a wavelength of 1550 nm.

10. The optical fiber according to of the preceding claims, having bending losses equal to or less than 20 dB/m for a bending radius of 10 mm at a wavelength of 1625 nm.

## Patentansprüche

1. Übertragungsglasfaser die vom Mittelpunkt zum Rand folgendes aufweist:
- einen Mittelkern mit einem Radius (r₁) größer oder gleich 5,5 µm und einem Brechungsindexunterschied (Δn₁) mit einem äußeren optischen Mantel zwischen 3,0.10⁻³ und 5,0.10⁻³,
- einen mittleren Mantel mit einem Radius (r₂) und einem Brechungsindexunterschied (Δn₂) mit dem äußeren optischen Mantel zwischen -1,0.10⁻³ und 1,0.10⁻³, wobei die Breite des mittleren Mantels (r₂ - r₁) größer als 5 µm ist,
- einen abgesenkten Mantel mit einem Radius (r₃) zwischen 11,5 µm und 16 µm und einem Brechungsindexunterschied (Δn₃) mit dem äußeren optischen Mantel zwischen -15,0.10⁻³ und -3,5.10⁻³, wobei die Breite des abgesenkten Mantels (r₃ - r₂) kleiner als 5 µm ist,
wobei die Glasfaser bei 1550 nm eine effektive Fläche (S_{eff}) größer oder gleich 120 µm² und eine effektive cut-off Wellenlänge (λ_{Ceff}) kleiner als 1600 nm hat.

2. Glasfaser nach Anspruch 1, wobei der Radius (r₁) des Mittelkerns zwischen 5,5 µm und 7,5 µm liegt.

3. Glasfaser nach einem der vorhergehenden Ansprüche, wobei der Radius (r₂) des mittleren Mantels zwischen 10,5 µm und 14,0 µm liegt.

4. Glasfaser nach einem der vorhergehenden Ansprüche, wobei die Breite (r₂ - r₁) des mittleren Mantels kleiner oder gleich 8 µm ist.

5. Glasfaser nach einem der vorhergehenden Ansprüche, wobei die Breite (r₃ - r₂) des abgesenkten Mantels größer oder gleich 1 µm ist.

6. Glasfaser nach einem der vorhergehenden Ansprüche, die einen Modenfelddurchmesser (2W₀₂) größer als 11,5 µm hat.

7. Glasfaser nach einem der vorhergehenden Ansprüche, die bei einer Wellenlänge von 1550 nm eine chromatische Dispersion kleiner oder gleich 21,5 ps/(nm·km) hat.

8. Glasfaser nach einem der vorhergehenden Ansprüche, die bei einer Wellenlänge von 1550 nm eine Steigung der chromatischen Dispersion kleiner oder gleich 0,065 ps/(nm²·km) hat.

9. Glasfaser nach einem der vorhergehenden Ansprüche, die bei einer Wellenlänge von 1550 eine Dämpfung kleiner oder gleich 0,19 dB/km hat.

10. Glasfaser nach einem der vorhergehenden Ansprüche, die bei einer Wellenlänge von 1625 nm Krümmungsverluste kleiner oder gleich 20 dB/m für einen Krümmungsradius von 10 mm hat.

## Revendications

1. Fibre optique de transmission, comprenant à partir du centre vers la périphérie :
- une âme centrale ayant un rayon (r₁) supérieur ou égal à 5,5 µm et une différence d'indice de réfraction (Δn₁) entre 3.0.10⁻³ et 5.0.10⁻³ avec un revêtement optique extérieur ;
- un revêtement intermédiaire ayant un rayon (r₂) et une différence d'indice de réfraction (Δn₂) entre - 1.0.10⁻³ et 1.0.10⁻³ avec le revêtement optique extérieur, la largeur du revêtement intermédiaire (r₂-r₁) étant supérieure à 5 µm ;
- un revêtement renfoncé ayant un rayon (r₃) entre 11,5 µm et 16 µm et une différence d'indice de réfraction (Δn₃) entre -15.0.10⁻³ et -3.5.10⁻³ avec le revêtement optique extérieur, la largeur du revêtement renfoncé (r₃-r₂) étant inférieure à 5 µm ;
la fibre optique ayant une surface utile (S_{eff}) à 1550 nm supérieure ou égale à 120 µm² et une longueur d'onde de coupure utile (λ_{ceff}) inférieure à 1600 nm.

2. Fibre optique selon la revendication 1, dans laquelle le rayon (r₁) de l'âme centrale est entre 5,5 µm et 7,5 µm.

3. Fibre optique selon l'une quelconque des revendications précédentes, dans laquelle le rayon (r₂) du revêtement intermédiaire est entre 10,5 µm et 14,0 µm.

4. Fibre optique selon l'une quelconque des revendications précédentes, dans laquelle la largeur (r₂-r₁) du revêtement intermédiaire est inférieure ou égale à 8 µm.

5. Fibre optique selon l'une quelconque des revendications précédentes, dans laquelle la largeur (r₃-r₂) du revêtement renfoncé est supérieure ou égale à 1 µm.

6. Fibre optique selon l'une quelconque des revendications précédentes, ayant un diamètre de champ de mode (2W₀₂) supérieur à 11,5 µm.

7. Fibre optique selon l'une quelconque des revendications précédentes, ayant une dispersion chromatique inférieure ou égale à 21,5 ps/nm-km à une longueur d'onde de 1550 nm.

8. Fibre optique selon l'une quelconque des revendications précédentes, ayant une pente de dispersion chromatique inférieure ou égale à 0,065 ps/nm²-km à une longueur d'onde de 1550 nm.

9. Fibre optique selon l'une quelconque des revendications précédentes, ayant une atténuation inférieure ou égale à 0,19 dB/km à une longueur d'onde de 1550 nm.

10. Fibre optique selon l'une quelconque des revendications précédentes, ayant des pertes de courbure inférieures ou égales à 20 dB/m pour un rayon de courbure de 10 mm à une longueur d'onde de 1625 nm.
